# FASCICULE DE BREVET EUROPEEN

(11) **EP 3 790 778 B1**
(45) Date de publication et mention de la délivrance du brevet: **08.10.2025**
(21) Numéro de dépôt: 19783581.2
(22) Date de dépôt: 16.04.2019
(51) Int. Cl.: B60W 20/40, B60K 6/52, B60K 6/48, B60K 6/387, B60K 6/485, B60W 10/06, B60W 10/08, B60W 10/02, B60W 10/10, B60W 30/188, B60W 50/00

(54) **PROCÉDÉ DE GESTION DE L'ENTRAÎNEMENT D'UN VÉHICULE AUTOMOBILE HYBRIDE, ET VÉHICULE**
VERFAHREN ZUR STEUERUNG DES ANTRIEBS EINES HYBRIDFAHRZEUGS, SOWIE FAHRZEUG
METHOD OF CONTROLLING A HYBRID MOTOR VEHICLE DRIVE, AND VEHICLE

(30) Priorité: 09.05.2018 FR 1853952
(43) Date de publication de la demande: 17.03.2021
(73) Titulaire: Stellantis Auto SAS, 78300 Poissy (FR)
(72) Inventeur: MILHAU, Yohan, 78630 ORGEVAL (FR); ROCQ, Gaetan, 78125 LA BOISSIERE ECOLE (FR)
(74) Mandataire: PSIP
(86) Numéro de dépôt international: PCT/FR2019/050902
(87) Numéro de publication internationale: WO 2019/215401

(56) Documents cités:
- EP-A1- 3 238 971
- EP-A1- 3 238 971
- FR-A1- 3 008 056
- FR-A1- 3 008 056
- FR-A1- 3 034 735
- FR-A1- 3 034 735

## Description

L'invention concerne le contrôle de l'entraînement d'un véhicule hybride à deux essieux d'entraînement. Plus précisément, l'invention traite d'un procédé de répartition de couple d'entraînement pour véhicule hybride. L'invention a également pour objet un véhicule automobile hybride.

Un véhicule hybride intègre un moteur électrique afin de circuler tout en maintenant son moteur thermique à l'arrêt. Cela permet un fonctionnement considéré comme plus propre puisque les émissions de gaz carbonique sont interrompues. En outre, le véhicule dispose d'une transmission intégrale lorsque le moteur thermique entraîne le train avant, et que le moteur électrique entraîne l'autre train, c'est-à-dire le train arrière. Cet agencement favorise également la sécurité du véhicule sur route glissante, ainsi que sa capacité à franchir certains obstacles nécessitant de passer davantage de couple au sol.

Le document FR 3 015 411 A1 divulgue un véhicule hybride comportant un moteur thermique essence ou diesel, entraînant les roues avant via une transmission. Une machine électrique principale arrière est couplée directement aux roues arrière du véhicule, et une machine électrique secondaire avant est couplée en permanence au moteur thermique afin de l'assister dans son fonctionnement. Une fonction de répartition de consigne de couple répartit la volonté du conducteur entre une consigne de couple sur le train avant et une consigne sur le train arrière, en émettant des consignes de couple pour le moteur thermique, la machine électrique avant et la machine électrique arrière.

On connait en outre du document de brevet EP-A1-3238971 un procédé selon le préambule de la revendication 1.

Cependant, lors du changement de mode d'entraînement nécessitant l'ajout du moteur thermique, les passagers ressentent un à-coup à l'instant où le moteur thermique est en prise avec les roues. En effet, le mécanisme d'embrayage présente une certaine imprécision qui s'ajoute à l'imprécision liée à la présence de la boîte de vitesse. L'à-coup reste perçu par les passagers comme une gêne qui détériore la qualité perçue du véhicule, en plus de réduire le confort général.

L'invention a pour objectif de résoudre au moins un des problèmes posés par l'art antérieur. Plus précisément, l'invention a pour objectif d'améliorer le confort d'un véhicule automobile hybride où chaque essieu est motorisé. L'invention a également pour objectif d'améliorer l'homogénéité d'entraînement d'un véhicule hybride lors du changement du couple d'entraînement fourni par le moteur thermique.

L'invention a pour objet un procédé selon la revendication 1, à savoir un procédé de répartition de couple d'entraînement pour véhicule hybride, le véhicule hybride comprenant un premier train motorisé par une première machine électrique, et par un moteur thermique via un premier système d'accouplement ; et un deuxième train motorisé par une deuxième machine électrique ; le procédé comprenant les étapes suivantes :
(a) entraînement du véhicule selon une première répartition de couples d'entraînement entre le premier train et le deuxième train;
(b) anticipation d'un besoin de changement d'état de fonctionnement du moteur thermique et de changement d'état d'accouplement du moteur thermique au premier train impliquant une deuxième répartition de couples d'entraînement entre le premier train et le deuxième train ;
et (c) évolution de la première répartition de couples d'entraînement à la deuxième répartition de couples d'entraînement en modifiant une consigne de couple généré par la première machine électrique sur le premier train et/ou généré par la deuxième machine électrique sur le deuxième train.

Suite à l'étape (c) évolution, le procédé comprend une période (d) attente de confirmation du besoin anticipé en étape (b) anticipation ; puis une étape (e) changement d'état du moteur thermique ; puis une étape (f) changement d'état d'accouplement mécanique entre le moteur thermique et le premier train.

Avantageusement, le procédé peut comprendre une ou plusieurs des caractéristiques suivantes:
- Le procédé comprend en outre une étape (g) variation de la proportion de couple d'entraînement entre le couple thermique CTH généré par le moteur thermique, et le couple électrique CEL généré par la première machine électrique et/ou par la deuxième machine électrique, l'étape (g) variation étant effectuée après l'étape (c) évolution. La variation en question est dimensionnée pour compenser les changements d'état du moteur thermique et d'accouplement mécanique, de manière à ce que le couple thermique CTH s'ajoutant (lorsque le changement d'état du moteur est un démarrage du moteur et le changement d'état d'accouplement mécanique entre le moteur thermique et le premier train est une fermeture de l'accouplement) ou disparaissant (lorsque le changement d'état du moteur est un arrêt du moteur et le changement d'état d'accouplement mécanique entre le moteur thermique et le premier train est une ouverture de l'accouplement) soit compensé par le couple électrique CEL.
- Avant l'étape (c) évolution, le procédé comprend une étape (β) changement d'état d'une boîte de vitesse apte à coupler et à désaccoupler le moteur thermique du premier train.
- La première machine électrique est intégrée dans ladite boîte de vitesse ou couplée au premier train indépendamment de la boîte de vitesse.
- Lors de l'étape (b) anticipation, la deuxième machine électrique génère un couple d'entraînement entrant dans une première marge par rapport à son couple maximal, ou la deuxième machine électrique génère un couple sortant d'une deuxième marge par rapport à son couple maximal.
- Lors de l'étape (a) entraînement, un premier couple est nécessaire à l'entraînement du véhicule hybride, et lors de l'étape (b) anticipation un deuxième couple, différent du premier couple, est nécessaire à l'entraînement du véhicule hybride.
- L'étape (b) anticipation est réalisée à partir d'une prévision de couple d'entrainement nécessaire, ladite prévision pouvant elle-même être réalisée à partir d'une demande de couple ou de vitesse de la part du conducteur et éventuellement un relief de la route sur laquelle évolue le véhicule hybride ou un comportement en vitesse et accélération dudit véhicule en fonction du couple d'entrainement.
- Le premier système d'accouplement est apte à accoupler et à désaccoupler le moteur thermique à la première machine électrique, et le véhicule hybride comporte en outre un deuxième système d'accouplement apte à accoupler et à désaccoupler la deuxième machine électrique du deuxième train.
- Le premier train est un train avant, et lors de l'étape (c) évolution, la première machine électrique est apte à entraîner le véhicule hybride indépendamment du moteur thermique.
- Lors de l'étape (g) variation, la deuxième répartition de couples d'entraînement est conservée.
- La première marge est supérieure à la deuxième marge, et/ou lesdites marges sont inférieures, notamment d'au moins : 5%, ou 10%, ou 20%, au couple maximal pouvant être délivré par la deuxième machine électrique.
- Lors de l'étape (f) changement de l'état d'accouplement mécanique, le premier système d'accouplement accouple le moteur thermique à la première machine électrique.
- La période (d) attente dure au moins : 100ms, ou 200 ms, ou 500 ms.
- Avant l'étape (β) changement d'état d'une boîte de vitesse, le procédé comprend une étape (α) vérification de l'état de la boîte de vitesse.
- Lors de l'étape (b) ou de l'étape (c), la somme des couples d'entrainement répondent à la volonté du conducteur exprimé en couple dans un référentiel donné, notamment un couple appliqué aux roues.
- Lors de l'étape (b) ou de l'étape (c), la somme des couples d'entrainement reste constante ; et/ou la vitesse du véhicule reste constante.

L'invention a également pour objet un véhicule hybride selon la revendication 6.

L'invention configure à l'avance le mode de répartition CAV/CAR correspondant à un entraînement thermique futur ou probable. L'invention peut également anticiper la coupure du moteur thermique et le fait que les machines électriques puissent prendre le relai.

Puisque le procédé selon l'invention adopte de manière anticipée un entraînement spécifique, le véhicule peut absorber la transition entre un mode électrique exclusif et un mode hybride. L'invention ajoute un temps intermédiaire permettant de masquer les imprécisions d'origines mécaniques.

D'autres caractéristiques et avantages de la présente invention seront mieux compris à l'aide de la description donnée à titre d'exemple et en référence aux dessins parmi lesquels :
La figure 1 présente un véhicule hybride selon l'invention.
La figure 2 est un diagramme du procédé de répartition de couple d'entraînement pour véhicule hybride selon l'invention.
La figure 3 montre un diagramme de variation de répartition de couple d'entraînement entre un premier train et un deuxième train selon l'invention.
La figure 4 montre un diagramme de variation de répartition de couple d'entraînement entre un premier train et un deuxième train lors de la variation d'une consigne de couple selon l'invention.

Dans la description qui va suivre, le sens avant correspond au son sens principal de déplacement du véhicule. Les orientations évoquées ci-après renvoient au sens normal de montage dans le véhicule. Dans la présente description un couple d'entraînement permet le déplacement du véhicule, par exemple à au moins 5 km/h. L'entraînement peut être entendu comme une traction ou une propulsion.

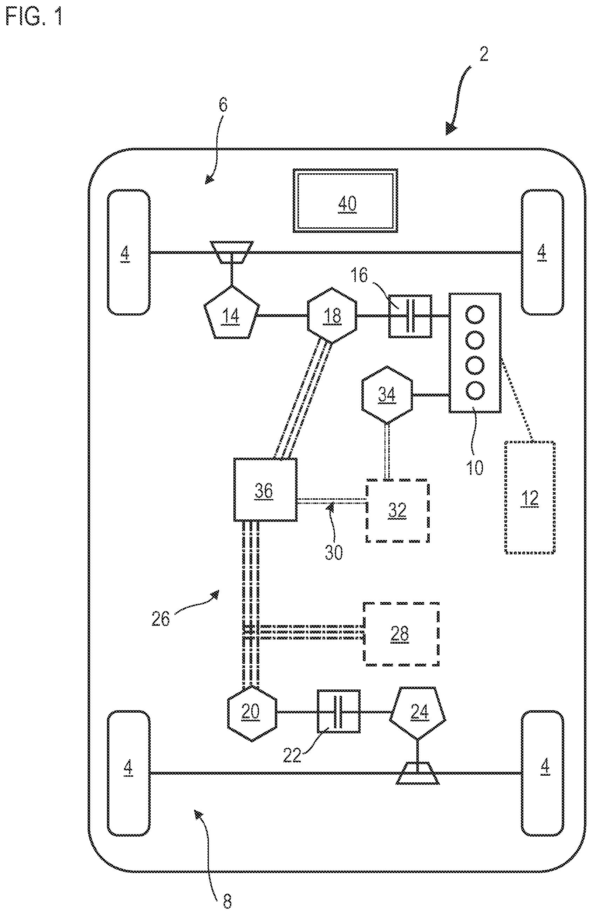

La figure 1 représente un véhicule hybride selon l'invention. Le véhicule hybride 2 comporte plusieurs roues 4 se répartissant en un premier train 6, notamment un train avant, et un deuxième train 8, notamment un train arrière. Chaque train comporte une roue gauche et une roue droite. Les emplacements du premier train et du deuxième train peuvent être intervertis.

Le véhicule 2 comporte un moteur principal, notamment un moteur thermique 10. Ce dernier peut être à explosion. Le moteur thermique 10 peut être associé au train avant 6 afin de déplacer le véhicule. Un réservoir de carburant 12, par exemple d'essence ou de diesel, peut l'alimenter. Le carburant peut être un fluide consommé. Grâce à ses moteurs, le véhicule hybride 2 présente un caractère automobile.

Le moteur thermique 10 entraine le premier train 6 via une boîte de vitesse 14, par exemple avec plusieurs rapports et un point mort. En outre, un premier système d'accouplement 16, tel un mécanisme d'embrayage, peut être inséré dans la chaîne d'entraînement du premier train 6 ; entre la boîte de vitesse 14 et le moteur thermique 10. Ainsi, le premier système d'accouplement 16 permet d'accoupler et de désaccoupler progressivement le moteur thermique 10 à la boîte de vitesse 14.

Une première machine électrique 18 permet de propulser le véhicule 2. Cette première machine électrique 18 peut être couplée au premier train 6 via la boîte de vitesse 14, éventuellement afin d'en moduler le couple sur le premier train 6. Optionnellement, la première machine électrique 18 est intégrée dans la boîte de vitesse 14, par exemple sur l'arbre de sortie ou l'arbre d'entrée. Le premier système d'accouplement 16 peut découpler la première machine électrique 18 du moteur thermique 10. Ainsi, la première machine électrique 18 peut propulser le véhicule 2 tout en conservant le moteur thermique à l'arrêt. Optionnellement, le couple d'entraînement de la première machine électrique 18 peut s'ajouter à celui du moteur thermique 10.

Le deuxième train 8 peut être motorisé grâce à une deuxième machine électrique 20. De la sorte, le véhicule 2 peut être propulsé de manière indépendante grâce au deuxième train 8. La chaîne d'entraînement du deuxième train 8 peut inclure un deuxième système d'accouplement 22 tel un crabot ou un mécanisme d'embrayage, et une réduction 24 reliant la deuxième machine électrique 20 aux roues 4 du deuxième train 8. Ainsi, la rotation de la deuxième machine électrique 20 peut être multipliée ou coupée par rapport aux roues 4 arrière.

Afin d'alimenter la deuxième machine électrique 20, le véhicule 2 peut comprendre un réseau électrique basse-tension 26 avec une batterie basse-tension 28, également appelée batterie de traction ou deuxième batterie. La tension du réseau électrique basse-tension 26 peut être comprise entre 200V et 300V. La première machine électrique 18 peut être alimentée par le réseau électrique basse-tension 26, éventuellement via un onduleur (non représenté). Le réseau très basse-tension 30 peut être un réseau de bord. Il peut présenter une tension de 12V à 24V. Ce réseau 30 peut également alimenter certains équipements du véhicule, tels des équipements de sécurité ou des accessoires de confort (non représentés). Le réseau très basse-tension 30 peut inclure une batterie très basse-tension 32. Cette dernière peut être rechargée par le moteur thermique 10 via un alterno-démarreur 34, qui peut être considéré comme une troisième machine électrique. L'alterno-démarreur 34 peut être séparé et distinct de la première machine électrique 18.

Le réseau électrique très basse-tension 30 peut être connecté électriquement au réseau électrique basse-tension 26 via un convertisseur 36. Le convertisseur 36 peut être du type courant continu/courant continu, également désigné par l'acronyme DC/DC. Le convertisseur 36 peut être branché à l'alterno-démarreur 34 via la convertisseur 36, si bien que la batterie basse-tension 28 peut être rechargée grâce au moteur 10.

De manière générale, le moteur thermique 10 peut être un moteur principal. Il fonctionne à l'aide d'une énergie différente de celle de la première et de la deuxième machine électrique. Sa puissance peut être supérieure à celle de chacune des machines électriques. Lorsqu'il est en prise avec les roues 4 du premier train 6, l'entraînement du véhicule sera essentiellement ou totalement assuré par lui-même. En cas d'entraînement électrique, la deuxième machine électrique 20 est privilégiée par rapport à la première, car son rendement peut être supérieur.

Le véhicule hybride 2 peut comporter un ordinateur 40, par exemple un ordinateur dédié à la gestion des couples d'entraînement des trains (6 ; 8), ou un ordinateur de bord assurant diverses fonctions nécessaires au fonctionnement général du véhicule. L'ordinateur 40 peut comprendre des instructions de code informatique permettant de piloter les différentes machines électriques et le moteur.

En fonction des consignes du conducteur, le véhicule 2 ; via l'ordinateur 40 ; peut alimenter sélectivement le moteur thermique 10, la première machine électrique 18, et/ou la deuxième machine électrique 20 ; afin qu'ils génèrent un couple d'entraînement sur leurs trains respectifs. L'ordinateur 40 peut imposer des consignes de couple au moteur 10 et aux machines, ces consignes peuvent être différentes et varier au cours du temps.

Dans un premier mode d'entraînement A, le véhicule 2 est uniquement entraîné par la deuxième machine 20. Dans un deuxième mode d'entraînement B, le véhicule hybride 2 est entraîné par chacun de ses trains, uniquement de manière électrique. Dans un troisième mode d'entraînement C, le véhicule est entraîné de manière hybride en mode quatre roues motrices ; en générant du couple via la deuxième machine et via le moteur thermique. Ce mode est entendu comme hybride puisque deux natures d'énergies interviennent.

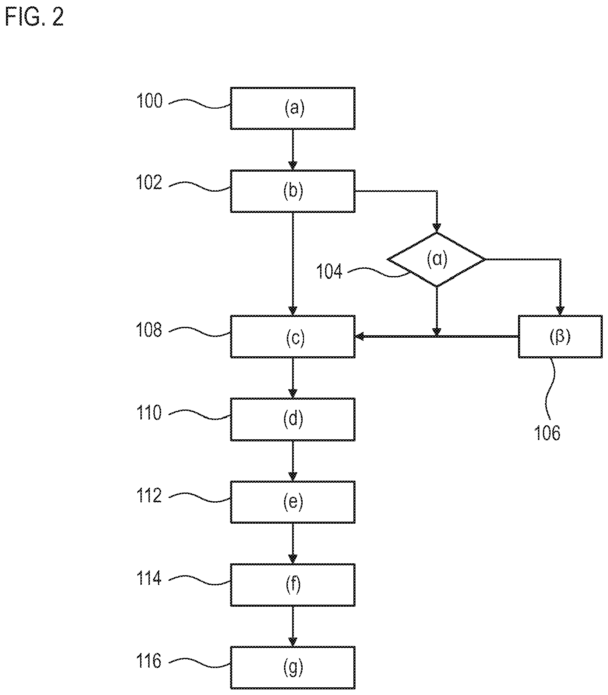

La figure 2 est un diagramme du procédé de répartition de couple d'entraînement pour véhicule hybride. Le véhicule hybride peut être identique à celui présenté en relation avec la figure 1. Les modes d'entraînement peuvent correspondre à ceux listés ci-dessus.

Le procédé comprend les étapes suivantes ; réalisées dans l'ordre qui suit :
(a) entraînement 100 du véhicule selon une première répartition de couples d'entraînement entre le premier train et le deuxième train;
(b) anticipation 102 d'un besoin de changement d'état de fonctionnement du moteur thermique, et de changement d'état d'accouplement du moteur thermique au premier train nécessitant une deuxième répartition de couples d'entraînement entre le premier train et le deuxième train ;
   (α) vérification 104 de l'état de la boîte de vitesse ;
   (β) changement 106 d'état de la boîte de vitesse lorsqu'en étape (α) vérification 104 il est identifié que ladite boîte de vitesse désaccouple le moteur thermique du premier train et de la première machine ;
(c) évolution 108 de la première répartition de couples d'entraînement à la deuxième répartition de couples d'entraînement en modifiant une consigne de couple généré par la première machine électrique sur le premier essieu et/ou généré par la deuxième machine électrique sur le deuxième essieu ;
(d) attente 110 de confirmation du besoin anticipé en étape (b) anticipation ;
(e) changement 112 d'état du moteur thermique ; puis
(f) changement 114 de l'état d'accouplement mécanique entre le moteur thermique et le premier train ;
(g) variation 116 de la proportion de couple d'entraînement entre le couple d'entraînement d'origine thermique et le couple d'entraînement d'origine électrique.

Le présent procédé peut être effectué lorsque le véhicule hybride circule à vitesse constante ou en modifiant sa vitesse en accélérant ou en décélérant ; sur route horizontale, en montée ou en descente.

Ainsi, lorsque le véhicule circule à vitesse constante ; par exemple lors de l'étape (a) entraînement 100 ; un premier couple d'entraînement est imposé par une consigne de couple issue de l'interprétation de la volonté du conducteur ou par un programme de conduite autonome. Puis lorsque le véhicule s'engage sur une montée, le couple d'entraînement augmente, par exemple jusqu'à un deuxième couple d'entraînement ; notamment lorsqu'une consigne de vitesse constante est imposée.

Lorsqu'en étape (a) entraînement 100, le véhicule est entraîné via la deuxième machine électrique uniquement, le fait d'avoir besoin d'un deuxième couple d'entraînement peut rapprocher la deuxième machine électrique de son couple maximal, ou entrer dans une zone de fonctionnement où la deuxième machine électrique entre dans une marge critique de sécurité. Faire face à ce nouveau besoin de couple d'entraînement peut imposer de fournir un surcroît de couple d'entraînement grâce au moteur thermique. En d'autres termes, ce potentiel nouveau besoin de couple d'entrainement implique un changement d'état de fonctionnement du moteur thermique et de changement d'état d'accouplement du moteur thermique au premier train, en l'occurrence un démarrage du moteur thermique et une fermeture de l'accouplement dudit moteur, et implique aussi une deuxième répartition de couples d'entraînement entre le premier train et le deuxième train. L'invention prévoit à l'avance un nouveau besoin pouvant se présenter, et déclenche l'étape (b) anticipation 102 dès lors que ce besoin potentiel implique un changement d'état de fonctionnement du moteur thermique et de changement d'état d'accouplement du moteur thermique au premier train, et une deuxième répartition de couples d'entraînement entre le premier train et le deuxième train.

Puisque l'action du moteur thermique implique une évolution de la répartition du couple d'entraînement entre le premier train et le deuxième train, l'étape (b) anticipation 102 permet de configurer à l'avance le véhicule selon cette nouvelle ou deuxième répartition de couple. La deuxième répartition de couple d'entraînement entre le premier train et le deuxième train peut être prédéfinie, par exemple en fonction du mode d'entraînement (A ; B ; C...) choisi. Ces modes d'entraînement peuvent optimiser la consommation du véhicule, et/ou améliorer la tenue de route. Par exemple, le mode d'entraînement C peut être à 60/40 ; étant entendu que le premier train apporte 60% du couple d'entraînement, et que le deuxième train en apporte 40%.

L'étape (b) anticipation 102 est effectuée avant que l'action du moteur thermique ne soit nécessaire. Ainsi, lorsque le moteur thermique doit effectivement tracter le véhicule, ce dernier respecte déjà la répartition correspondant au mode hybride, ce qui gomme toute fluctuation ultérieure du couple d'entraînement total. En effet, lorsque le véhicule accoste le moteur thermique au premier train, une simple modification des consignes de couple de la première machine électrique et/ou du moteur thermique est suffisante. Cette modification des consignes peut s'effectuer sans capteurs de couple. Les imprécisions liées au premier système d'accouplement et à la boîte de vitesse ne s'ajoutent pas, et sont annihilées.

L'étape (d) attente 110 est une phase de temporisation. Elle peut durer au moins 200 ms. Elle permet une confirmation du besoin réel, et évite des modifications rendues inutiles en cas d'inversion de mode de fonctionnement du véhicule.

Lors de l'étape (g) variation 116, le couple d'origine thermique est généré par le moteur thermique, tandis que le couple d'origine électrique est généré par la première machine électrique et/ou par la deuxième machine électrique. L'étape (g) variation 116 peut s'opérer en différé par rapport à l'étape (c) évolution 108, au moins de la durée de l'étape (d) attente 110.

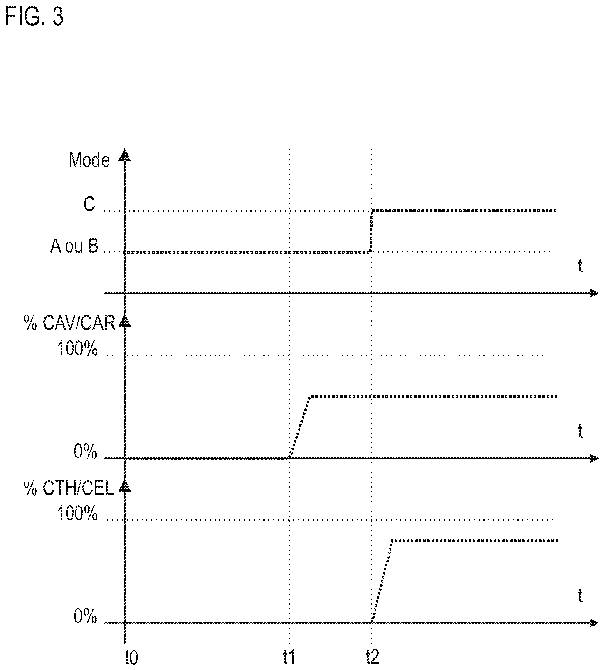

Les étapes (α) vérification 104 de l'état de la boîte de vitesse et (β) changement 106 d'état de la boîte de vitesse sont entièrement optionnelles puisque la présence d'une boîte de vitesse couplée à la première machine électrique et/ou au moteur thermique reste un aspect optionnel de l'invention. En effet, la première machine peut être couplée aux roues du premier train via une chaîne de transmission indépendante de la boîte de vitesse. Ainsi, le procédé peut effectuer l'étape (c) évolution 108 directement après l'étape (b) anticipation 102. La figure 3 est un diagramme montrant l'évolution de la proportion entre le couple d'entraînement d'un train avant CAV et le couple d'entraînement d'un train arrière CAR, l'évolution de la proportion entre le couple thermique CTH et le couple électrique CEL ; en fonction d'un changement de mode d'entrainement d'un véhicule hybride. L'échelle de temps est commune.

Le procédé effectué peut correspondre à celui décrit en relation avec la figure 2, et le véhicule comme les modes peuvent correspondre à ceux détaillés en liaison avec la figure 1. Dans le présent exemple, le premier train correspond au train avant, et le deuxième train au train arrière.

Entre l'instant t0 et l'instant t1, le mode d'entraînement A ou B suffisent à faire face aux besoins du véhicule. A l'instant t1, le véhicule peut s'engager sur une montée nécessitant une augmentation de couple proche de ce que les machines électriques peuvent délivrer. Optionnellement, l'engagement sur cette montée peut présenter une probabilité nécessitant statistiquement l'utilisation du moteur électrique.

Immédiatement, le procédé anticipe et modifie, par exemple progressivement, la répartition de couple entre le train avant et le train arrière. Ainsi, s'il est vérifié que plus tard ; par exemple en un instant t2, l'utilisation du moteur thermique est nécessaire, le véhicule montre déjà la configuration nécessaire pour absorber l'effet du moteur thermique. Le véhicule est plus réactif. Le temps pendant lequel la deuxième machine électrique fonctionne dans une plage maximale diminue, ce qui peut la préserver. Le changement, par exemple l'inversion, de répartition entre le couple thermique CTH et le couple électrique CEL peut s'effectuer après le transfert de couple du train arrière au train avant. La période entre les instants t1 et t2 peut correspondre à la période (d) attente.

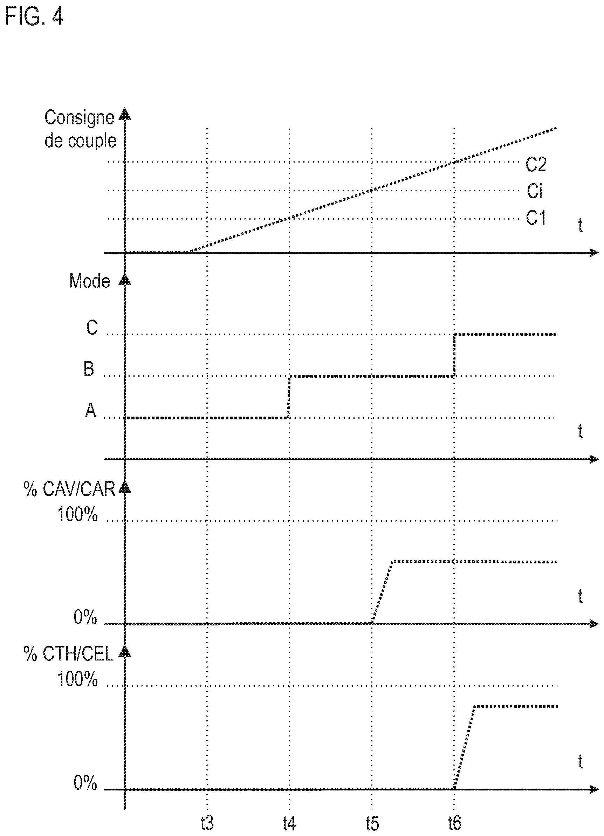

La figure 4 est un diagramme montrant l'évolution de la proportion entre le couple d'entraînement d'un train avant CAV et le couple d'entraînement d'un train arrière CAR, l'évolution de la proportion entre le couple thermique CTH et le couple électrique CEL ; en fonction de changements de mode d'entrainement d'un véhicule hybride répondant à une variation de consigne de couple exigée par le conducteur. L'échelle de temps est commune. Le présent diagramme peut suivre celui présenté en relation avec la figure 3.

Le procédé effectué peut correspondre à celui décrit en relation avec la figure 2, et le véhicule comme les modes peuvent correspondre à ceux détaillés en liaison avec la figure 1. Dans le présent exemple, le premier train correspond au train avant, et le deuxième train au train arrière.

Avant l'instant t3, le véhicule est en mode d'entraînement A. Le conducteur augmente la consigne de couple par exemple en accélérant, ou en maintenant une vitesse constante sur une montée.

A un instant t4 la consigne de couple a augmenté jusqu'à un premier couple C1 pour lequel le procédé impose un changement de mode, si bien que le véhicule adopte le mode d'entraînement B. Les couples d'entraînement de la première et de la deuxième machine s'ajoutent.

A l'instant t5, la consigne de couple atteint un couple intermédiaire Ci pour lequel le procédé décide d'effectuer l'étape (b) d'anticipation, puis de modifier la proportion entre le couple avant CAV et le couple arrière CAR. A cet instant le moteur thermique peut rester éteint.

Après un délai de latence, à l'instant t6, le moteur thermique est démarré puis le premier système d'accouplement embraye. Le moteur thermique apporte progressivement du couple au véhicule, et simultanément la première machine électrique diminue son couple fourni. Ainsi, la proportion de couple CAV/CAR reste constante après l'instant t6. Le véhicule hybride reçoit un couple nécessaire pour faire face à la consigne de couple tout en conservant une marge.

## Revendications

1. Procédé de répartition de couple d'entraînement pour véhicule hybride (2), le véhicule hybride (2) comprenant un premier train (6) motorisé par une première machine électrique (18), et par un moteur thermique (10) via un premier système d'accouplement (16); et un deuxième train (8) motorisé par une deuxième machine électrique (20) ; le procédé comprenant une étape :
(a) entraînement (100) du véhicule (2) selon une première répartition de couples d'entraînement entre le premier train (6) et le deuxième train (8); et
(b) anticipation (102) d'un besoin potentiel de changement d'état de fonctionnement du moteur thermique (10) et de changement d'état d'accouplement du moteur thermique (10) au premier train (6) impliquant une deuxième répartition de couples d'entraînement entre le premier train (6) et le deuxième train (8); **caractérisé en ce que** le procédé comprend en outre les étapes suivantes:
(c) évolution (108) de la première répartition de couples d'entraînement à la deuxième répartition de couples d'entraînement en modifiant une consigne de couple généré par la première machine électrique (18) sur le premier train (6) et/ou généré par la deuxième machine électrique (20) sur le deuxième train (8), et suite à l'étape (c) évolution (108), une période (d) attente (110) de confirmation du besoin potentiel anticipé en étape (b) anticipation (102) ; puis une étape (e) changement (112) d'état du moteur thermique (10); puis une étape (f) changement (114) d'état d'accouplement mécanique entre le moteur thermique (10) et le premier train (6).

2. Procédé selon la revendication 1, comprenant en outre une étape (g) variation (116) de la proportion de couple d'entraînement entre le couple thermique CTH généré par le moteur thermique (10), et le couple électrique CEL généré par la première machine électrique (18) et/ou par la deuxième machine électrique (20), l'étape (g) variation (116) étant effectuée après l'étape (c) évolution (108).

3. Procédé selon l'une des revendications 1 à 2, dans lequel, avant l'étape (c) évolution (108), le procédé comprend une étape (β) changement (106) d'état d'une boîte de vitesse (14) apte à coupler et à désaccoupler le moteur thermique (10) du premier train (6).

4. Procédé selon l'une des revendications 1 à 3, dans lequel, lors de l'étape (b) anticipation (102), la deuxième machine électrique (20) génère un couple d'entraînement entrant dans une première marge par rapport à son couple maximal, ou la deuxième machine électrique (20) génère un couple sortant d'une deuxième marge par rapport à son couple maximal.

5. Procédé selon l'une des revendications 1 à 4, dans lequel, lors de l'étape (a) entraînement (100), un premier couple est nécessaire à l'entraînement du véhicule hybride (2), et lors de l'étape (b) anticipation (102) un deuxième couple, différent du premier couple, est nécessaire à l'entraînement du véhicule hybride (2).

6. -Véhicule hybride (2) comprenant : un ordinateur (40), un premier train (6) entraîné par une première machine électrique (18), et par un moteur thermique (10) via un premier système d'accouplement (16) ; et un deuxième train (8) entraîné par une deuxième machine électrique (20) ; **caractérisé en ce que** l'ordinateur (40) comprend des instructions de code de programme pour l'exécution des étapes du procédé selon l'une des revendications 1 à 5 lorsque ledit programme est exécuté sur l'ordinateur (40).

7. Véhicule selon la revendication 6, dans lequel la première machine électrique (18) est intégrée dans ladite boîte de vitesse (14) ou couplée au premier train (6) indépendamment de la boîte de vitesse.

8. Véhicule selon l'une des revendications 6 ou 7, dans lequel le premier système d'accouplement (16) est apte à accoupler et à désaccoupler le moteur thermique (10) à la première machine électrique (18), et le véhicule hybride (2) comporte en outre un deuxième système d'accouplement (22) apte à accoupler et à désaccoupler la deuxième machine électrique (20) du deuxième train (8).

9. Véhicule selon l'une des revendications 6 à 8, dans lequel le premier train (6) est un train avant, et lors de l'étape (c) évolution (108), la première machine électrique (18) est apte à entraîner le véhicule hybride (2) indépendamment du moteur thermique (10).

## Patentansprüche

1. Verfahren zum Verteilen des Antriebsdrehmoments für ein Hybridfahrzeug (2), wobei das Hybridfahrzeug (2) einen ersten Antriebsstrang (6) umfasst, der von einer ersten elektrischen Maschine (18) und einer Wärmekraftmaschine (10) über eine
erstes Kupplungssystem (16); und einen zweiten Zug (8), der von einer zweiten elektrischen Maschine (20) angetrieben wird; wobei das Verfahren einen Schritt umfasst:
(a) Antreiben (100) des Fahrzeugs (2) gemäß einer ersten Verteilung von Antriebsdrehmomenten zwischen dem ersten Zug (6) und dem zweiten Zug (8); **dadurch gekennzeichnet , dass** das Verfahren weiterhin die folgenden Schritte umfasst:
(b) Antizipation (102) eines möglichen Bedarfs an einer Änderung des Betriebszustands der Wärmekraftmaschine (10) und einer Änderung des Kupplungszustands der Wärmekraftmaschine (10) mit dem ersten Strang (6), die eine zweite Verteilung der Antriebsdrehmomente zwischen dem ersten Strang beinhaltet(6) und dem zweiten Zug (8 ); und
(c) Entwicklung (108) von der ersten Verteilung der Antriebsdrehmomente zur zweiten Verteilung der Antriebsdrehmomente durch Modifizierung eines Drehmomentsollwerts, der von der ersten elektrischen Maschine (18) am ersten Strang (6) und/oder von der zweiten elektrischen Maschine (20) am der zweite Zug (8), und nach Schritt (c) Entwicklung (108),
umfasst das Verfahren eine Periode (d) des Wartens (110) auf die Bestätigung des potentiellen Bedarfs, der in Schritt (b) Antizipation (102) antizipiert wurde; dann einen Schritt (e) der Änderung (112) des Zustands der Wärmekraftmaschine (10); dann einen Schritt (f) der Änderung (114) des Zustands der mechanischen Kopplung zwischen der Maschine Thermik (10) und der erste Zug (6).

2. Verfahren nach einem der Ansprüche 1, **dadurch gekennzeichnet, dass** das Verfahren ferner einen Schritt (g) Variation (116) des Anteils des Antriebsdrehmoments zwischen dem thermischen Drehmoment CTH, das von der Wärmekraftmaschine (10) erzeugt wird, und dem elektrischen Drehmoment CEL, das von der ersten Elektromaschine (18) und/oder durch die zweite Elektromaschine (20), wobei der Schritt (g) Variation (116) nach dem Schritt (c) Evolution (108) ausgeführt wird.

3. Verfahren nach einem der Ansprüche 1 bis 2, **dadurch gekennzeichnet, dass** das Verfahren vor der Durchführung des Schrittes (c) (108) einen Schritt (13) zur Zustandsänderung (106) eines Getriebes (14) umfasst, das in der Lage ist, die Wärmekraftmaschine (10) mit dem ersten Getriebezug (6) zu verbinden und von diesem zu trennen.

4. Verfahren nach Anspruch 3, **dadurch gekennzeichnet, dass** die erste Maschine (18) ist in das Getriebe (14) integriert oder unabhängig vom Getriebe mit dem ersten Strang (6) gekoppelt.

5. Verfahren nach einem der Ansprüche 1 bis 4, **dadurch gekennzeichnet, dass** während des Schritts (b) Vorwegnahme (102) die zweite elektrische Maschine (20) ein Antriebsdrehmoment erzeugt , das in einen ersten Bereich relativ zu seinem maximalen Drehmoment hineinreicht, oder die zweite elektrische Maschine (20) ein Drehmoment erzeugt, das in einen zweiten Bereich relativ zu ihrem maximalen Drehmoment hinausreicht.

6. Verfahren nach einem der Ansprüche 1 bis 5, **dadurch gekennzeichnet, dass** bei im Schritt (a) Fahren (100) wird ein erstes Drehmoment zum Antrieb des Hybridfahrzeugs (2) benötigt und im Schritt (b) Antizipieren (102) wird ein zweites, vom ersten Drehmoment verschiedenes Drehmoment zum Antrieb des Hybridfahrzeugs (2) benötigt.

7. Verfahren nach einem der Ansprüche 1 bis 6, **dadurch gekennzeichnet, dass** die Das erste Kupplungssystem (16) ist in der Lage,
die Wärmekraftmaschine (10) mit der ersten elektrischen Maschine (18) zu koppeln und von dieser zu trennen, und das Hybridfahrzeug (2) umfasst ferner ein zweites Kupplungssystem (22), das in der Lage ist, die zweite elektrische Maschine (20) mit dem zweiten Zug (8) zu koppeln und von dieser zu trennen.

8. Verfahren nach einem der Ansprüche 1 bis 7, **dadurch gekennzeichnet, dass** die der erste Zug (6) ein Frontzug ist und während der Evolution von Schritt (c) (108) die erste elektrische Maschine (18) in der Lage ist, das Hybridfahrzeug (2) unabhängig von der Wärmekraftmaschine (10) anzutreiben.

9. Hybridfahrzeug (2), umfassend: einen Computer (40), einen ersten Zug (6), der von einer ersten elektrischen Maschine (18) und einem Verbrennungsmotor (10) über ein erstes Kupplungssystem (16) angetrieben wird, und einen zweiten Zug (8), der von einer zweiten elektrischen Maschine (20) angetrieben wird; gekennzeichnet , dass der Computer (40) Programmcodeanweisungen zum Ausführen der Schritte des Verfahrens emäß einem der Ansprüche 1 bis 8 umfasst, wenn das Programm auf dem Computer (40) ausgeführt wird.

## Claims

1. Method for distributing drive torque for a hybrid vehicle (2), the hybrid vehicle (2) comprising a first train (6) powered by a first electric machine (18), and by a thermal engine (10) via a
first coupling system (16); and a second train (8) powered by a second electric machine (20); the method comprising a step:
(a) driving (100) the vehicle (2) according to a first distribution of driving torques between the first train (6) and the second train (8);
**characterized in that** the method further comprises the following steps:
(b) anticipation (102) of a potential need for a change in the operating state of the heat engine (10) and a change in the coupling state of the heat engine (10) to the first train (6) involving a second distribution of drive torques between the first train (6) and the second train (8 ); and
(c) evolution (108) from the first distribution of drive torques to the second distribution of drive torques by modifying a torque setpoint generated by the first electric machine (18) on the first train (6) and/or generated by the second electric machine (20) on
the second train (8), and following step (c) evolution (108), the method comprises a period (d) waiting (110) for confirmation of the potential need anticipated in step (b) anticipation (102); then a step (e) change (112) of state of the thermal engine (10); then a step (f) change (114) of state of mechanical coupling between the engine thermal (10) and the first train (6).

2. Method according to one of claims 1, **characterized in that** the method further comprises a step (g) variation (116) of the proportion of drive torque between the thermal torque CTH generated by the heat engine (10), and the electric torque CEL generated by the first
machine (18) and/or by the second electric machine (20), the step (g) variation (116) being carried out after the step (c) evolution (108).

3. Method according to one of claims 1 to 2, **characterized in that** before step (c) evolution (108), the method comprises a step (13) change (106) of state of a gearbox (14) capable of coupling and uncoupling the thermal engine (10) from the first train (6).

4. Method according to claim 3, **characterized in that** the first machine (18) is integrated into said gearbox (14) or coupled to the first train (6) independently of the gearbox.

5. Method according to one of claims 1 to 4, **characterized in that** during step (b) anticipation (102), the second electrical machine (20) generates a drive torque entering a first margin relative to its maximum torque, or the second electric machine (20) generates a torque leaving a second margin relative to its maximum torque.

6. Method according to one of claims 1 to 5, **characterized in that** when in step (a) driving (100), a first torque is required to drive the hybrid vehicle (2), and in step (b) anticipation (102) a second torque, different from the first torque, is required to drive the hybrid vehicle (2).

7. Method according to one of claims **1** to 6, **characterized in that** the first coupling system (16) is capable of coupling and uncoupling the thermal engine (10) to the first electric machine (18), and the hybrid vehicle (2) further comprises a second coupling system (22) capable of coupling and uncoupling the second electric machine (20) from the second train (8).

8. Method according to one of claims **1** to 7, **characterized in that** the first train (6) is a front train, and during step (c) evolution (108), the first electric machine (18) is capable of driving the hybrid vehicle (2) independently of the thermal engine (10).

9. Hybrid vehicle (2) comprising: a computer (40), a first train (6) driven by a first electric machine (18), and by a thermal engine (10) via a first coupling system (16); and a second train (8) driven by a second electric machine (20); **characterized in that** the computer (40) comprises program code instructions for executing the steps of the method according to one of claims 1 to 8 when said program is executed on the computer (40).
